# EUROPÄISCHE PATENTANMELDUNG

(11) **EP 1 420 339 A1**
(43) Veröffentlichungstag der Anmeldung: **19.05.2004**
(21) Anmeldenummer: 03023890.1
(22) Anmeldetag: 21.10.2003
(51) Int. Cl.: G06F 9/445

(54) **Verfahren zur Handhabung von Programm- und/oder Datenfiles**

(30) Priorität: 13.11.2002 DE 10252854
(71) Anmelder: SIEMENS AKTIENGESELLSCHAFT, 80333 München (DE)
(72) Erfinder: Smidt, Gernot, 91180 Heideck (DE); Wolfrum, Klaus, 91052 Erlangen (DE)

(57) **Zusammenfassung**

Die Erfindung betrifft ein Verfahren zur Handhabung von Programm- und/oder Datenfiles, nämlich zum Überprüfen und/oder Updaten von auf mobilen Programmier- und/oder Diagnoseeinrichtungen (2) gespeicherten Programm- und/oder Datenfiles.

Auf einem zentralen Server (4) werden Programm- und/oder Datenfiles gespeichert, verwaltet und erneuert, wobei Kopien mindestens einiger der auf dem Server (4) gespeicherten Programm- und/oder Datenfiles auf den mobilen Programmierund/oder Diagnoseeinrichtungen (2) abgelegt werden, und wobei die auf den mobilen Programmier- und/oder Diagnoseeinrichtungen (2) abgelegten Programm- und/oder Datenfiles zur Bearbeitung von Produkten (1) verwendet werden.

Erfindungsgemäß wird vor und/oder während der Bearbeitung eines Produkts (1) automatisch überprüft, ob die auf den mobilen Programmier- und/oder Diagnoseeinrichtungen (2) abgelegten Programm- und/oder Datenfiles dahingehend mit den auf dem Server (4) gespeicherten Programm- und/oder Datenfiles übereinstimmen, dass auf dem Server (4) erneuerte Programmund/oder Datenfiles auch auf der jeweiligen mobilen Programmier- und/oder Diagnoseeinrichtung erneuert sind, wobei abhängig von dieser Überprüfung gegebenenfalls das Updaten der mobilen Programmier- und/oder Diagnoseeinrichtungen (2) durchgeführt wird.

## Beschreibung

Die Erfindung betrifft ein Verfahren zur Handhabung von Programm- und/oder Datenfiles, nämlich zum Überprüfen und/oder Updaten von auf mobilen Programmier- und/oder Diagnoseeinrichtungen gespeicherten Programm- und/oder Datenfiles, gemäß dem Oberbegriff des Patentanspruchs 1.

Bei der Produktion von Gegenständen, zum Beispiel bei der Produktion von Kraftfahrzeugen, werden mobile Programmier- und/oder Diagnoseeinrichtungen verwendet, die von einem Arbeiter an den zu produzierenden Gegenstand angeschlossen werden und mithilfe derer der zu produzierende Gegenstand einerseits überprüft bzw. getestet und andererseits bearbeitet, nämlich zum Beispiel programmiert, werden kann. Solche mobilen Programmier- und/oder Diagnoseeinrichtungen werden auch als MDA (mobile Diagnoseadapter) bezeichnet. Auf diesen mobilen Programmier- und/oder Diagnoseeinrichtungen sind demzufolge Programm- und/oder Datenfiles gespeichert, die zur Produktion des Gegenstands verwendet werden. Bei diesen Programm- und/oder Datenfiles kann es sich zum Beispiel um ein Programm handeln, das auf eine Steuereinheit des Kraftfahrzeugs kopiert werden soll und demnach die Eigenschaften des herzustellenden Kraftfahrzeugs mitbestimmt.

Bei der Produktion solcher Gegenstände ist es üblich, dass derartige Programm- und/oder Datenfiles verändert und damit erneuert werden. Die Veränderung und Erneuerung der Programm- und/oder Datenfiles geschieht in der Regel dezentral, zum Beispiel bei Herstellern von Steuergeräten für Kraftfahrzeuge. Diesbezüglich ist nun von Wichtigkeit, dass auf einem zentralen Server im Produktionswerk spezielle, veränderte oder erneuerte Programm- und/oder Datenfiles gespeichert werden und diese erneuerten Programm- und/oder Datenfiles auch auf den mobilen Programmier- und/oder Diagnoseeinrichtungen abgelegt werden. Würde dies nicht erfolgen, so würden bei der Produktion der Gegenstände Programmier- und/oder Diagnoseeinrichtungen mit einem veralteten Bestand an Programm- und/oder Datenfiles verwendet werden. Die hergestellten Gegenstände wären dann fehlerhaft. Es ist demnach für eine einwandfreie Produktion der Gegenstände von Bedeutung, dass auf einem zentralen Server erneuerte Programm- und/oder Datenfiles auf den mobilen Programmier- und/oder Diagnoseeinrichtungen zur Verfügung gestellt werden. Dies soll so sicher und schnell wie möglich erfolgen, ohne jedoch den Produktionsprozess als solchen zu beeinträchtigen.

Hiervon ausgehend liegt der vorliegenden Erfindung das Problem zu Grunde ein neuartiges Verfahren zur Handhabung von Programm- und/oder Datenfiles zu schaffen.

Dieses Problem wird dadurch gelöst, dass das Eingangs genannte Verfahren durch die Merkmale des kennzeichnenden Teils des Patentanspruchs 1 weitergebildet ist.

Erfindungsgemäß wird vor und/oder während der Bearbeitung eines Produkts automatisch überprüft, ob die auf der entsprechenden mobilen Programmier- und/oder Diagnoseeinrichtung abgelegten Programm- und/oder Datenfiles dahingehend mit den auf dem Server gespeicherten Programm- und/oder Datenfiles übereinstimmen, dass auf dem Server erneuerte Programmund/oder Datenfiles auch auf der jeweiligen mobilen Programmier- und/oder Diagnoseeinrichtung erneuert sind, wobei abhängig von dieser Überprüfung gegebenenfalls das Updaten der mobilen Programmier- und/oder Diagnoseeinrichtungen durchgeführt wird.

Bevorzugte Weiterbildungen der Erfindung ergeben sich aus den Unteransprüchen und der nachfolgenden Beschreibung.

Nachfolgend wird ein bevorzugtes Ausführungsbeispiel der Erfindung anhand der Zeichnung näher erläutert. In der Zeichnung zeigt:
- Fig. 1: ein schematisiertes Blockschaltbild zur Verdeutlichung des der Erfindung zu Grunde liegenden Problems an einem konkreten Fallbeispiel,
- Fig. 2: ein weiteres schematisiertes Blockschaltbild zur Verdeutlichung des der Erfindung zu Grunde liegenden Problems,
- Fig. 3: ein schematisiertes Blockschaltbild zur Verdeutlichung des erfindungsgemäßen Grundprinzips,
- Fig. 4: ein Signalflussdiagramm zur Verdeutlichung des erfindungsgemäßen Verfahrens,
- Fig. 5: ein zweites Signalflussdiagramm zur Verdeutlichung des erfindungsgemäßen Verfahrens, und
- Fig. 6: ein weiteres Signalflussdiagramm zur Verdeutlichung des erfindungsgemäßen Verfahrens.

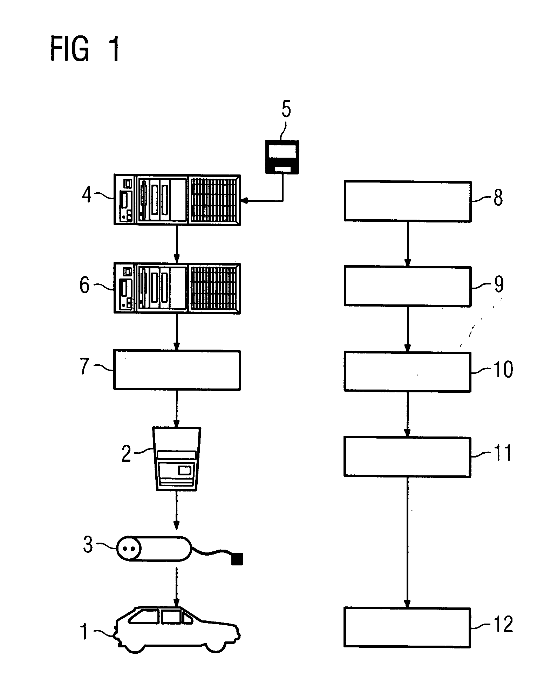

Fig. 1 verdeutlich stark schematisiert, dass der hier vorliegenden Erfindung zugrundeliegende Problem am Beispiel der Produktion eines Kraftfahrzeugs.

So zeigt Fig. 1 ein herzustellendes Kraftfahrzeug 1, wobei an das herzustellende Kraftfahrzeug 1 während des Produktionsprozesses von einem Arbeiter eine mobile Programmier- und/oder Diagnoseeinrichtung 2 angeschlossen wird. Das Anschließen der mobilen Programmier- und/oder Diagnoseeinrichtung 2 an das herzustellende Kraftfahrzeug 1 erfolgt über ein Verbindungskabel 3 mit entsprechenden Schnittstellen. Auf der mobilen Programmier- und/oder Diagnoseeinrichtung 2 sind Programm- und/oder Datenfiles gespeichert. Diese Programmund/oder Datenfiles werden zur Produktion des Kraftfahrzeugs 1 benötigt. So kann es sich bei diesen Programm- und/oder Datenfiles um Programme oder Daten handeln, die zur Überprüfung des Kraftfahrzeugs benötigt werden. Auch ist vorstellbar, dass die auf der mobilen Programmier- und/oder Diagnoseeinrichtung 2 gespeicherten Programm- und/oder Datenfiles zur Programmierung des Kraftfahrzeugs 1 benötigt werden. In diesem Zusammenhang ist es selbstverständlich von Wichtigkeit, dass die auf der mobilen Programmier- und/oder Diagnoseeinrichtung 2 gespeicherten Programm- und/oder Datenfiles aktuell und damit up-to-date sind.

Fig. 1 zeigt weiterhin einen zentralen Server 4, auf welchem Programm- und/oder Datenfiles gespeichert, verwaltet und erneuert werden. So können nämlich zur Veränderung des herzustellenden Produkts die Programm- und/oder Datenfiles entsprechend abgeändert werden. Diese Abänderung muss nicht zwangsläufig auf dem Server 4 erfolgen. Dies kann auch an anderen Rechnereinrichtungen durchgeführt werden. Die an anderen Rechnereinrichtungen durchgeführten Änderungen an den Programm- und/oder Datenfiles werden dann mithilfe einer Diskette 5 auf dem Server 4 abgelegt.

Auf dem Server 4 sind demnach alle in der Produktion benötigten Programm- und/oder Datenfiles abgelegt. Diese werden vom Server 4 einer in der Produktionsanlage angeordneten Prüfstation 6 zur Verfügung gestellt. Die Prüfstation 6 ist hierzu mit dem Server 4 vernetzt. Bei der Prüfstation 6 handelt es sich ebenfalls wie beim Server 4 um einen Rechner bzw. Computer. Auf der Prüfstation 6 sind entweder alle auf dem Server 4 gespeicherten und verwalteten Programm- und/oder Datenfiles abgelegt oder lediglich eine Teilmenge derselben. Auf der Prüfstation 6 sind vorzugsweise nur die Programm- und/oder Datenfiles abgelegt, die von der Prüfstation 6 zur Durchführung eines von der Prüfstation 6 gesteuerten Bearbeitungsschritts am Kraftfahrzeug 1 erforderlich sind. Die Produktion eines Kraftfahrzeugs 1 gliedert sich nämlich in eine Vielzahl von Bearbeitungsschritten auf, die von unterschiedlichen Prüfstationen gesteuert werden. Innerhalb einer Prüfstation 6 müssen demnach lediglich die Programm- und/oder Datenfiles abgelegt werden, die für den von der jeweiligen Prüfstation 6 gesteuerten Bearbeitungsschritt erforderlich sind. Die auf der Prüfstation 6 abgelegten Programm- und/oder Datenfiles werden von der Prüfstation 6 den mobilen Programmier- und/oder Diagnoseeinrichtungen 2 bereitgestellt. Die Übertragung von Programm- und/oder Datenfiles von der Prüfstation 6 auf die Programmier- und/oder Diagnoseeinrichtung 2 erfolgt wie in der Produktion drahtlos über Funk oder auch in einer gesonderten Station per Kabel. Fig. 1 zeigt ein Modul 7 zur Funkübertragung zwischen der Prüfstation 6 und der mobilen Programmier- und/oder Diagnoseeinrichtung 2.

Im rechten Teil der Fig. 1 ist als Signalflussdiagramm nochmals die prinzipielle Vorgehensweise zur Erneuerung von Programm- und/oder Datenfiles gezeigt.

So visualisiert ein erster Block 8, dass geänderte Programmund/oder Datenfiles auf dem zentralen Server 4 gespeichert werden. Der zentrale Server 4 stellt die einer konkreten Prüfstation 6 zugeordneten und von der Prüfstation 6 zur Produktion oder zum Update benötigten Programm- und/oder Datenfiles der Prüfstation 6 zur Verfügung. Es werden demnach Kopien der gegebenenfalls erneuerten Programm- und/oder Datenfiles auf der Prüfstation 6 gespeichert. Dies ist mit dem Block 9 visualisiert. Einige oder alle der auf der Prüfstation 6 abgelegten Programm- und/oder Datenfiles müssen einerseits von der Prüfstation 6 an die mobile Programmier- und/oder Diagnoseeinrichtung 2 übertragen und andererseits auf derselben abgelegt und damit gespeichert werden. Das Übertragen der Programm- und/oder Datenfiles ist durch den Block 10 und das Speichern derselben auf der Programmier- und/oder Diagnoseeinrichtung 2 durch den Block 11 visualisiert. Die auf der Programmier- und/oder Diagnoseeinrichtung 2 gespeicherten Programm- und/oder Datenfiles werden dann letztendlich zur Produktion des Kraftfahrzeugs 1 verwendet. Dies ist durch den Block 12 dargestellt.

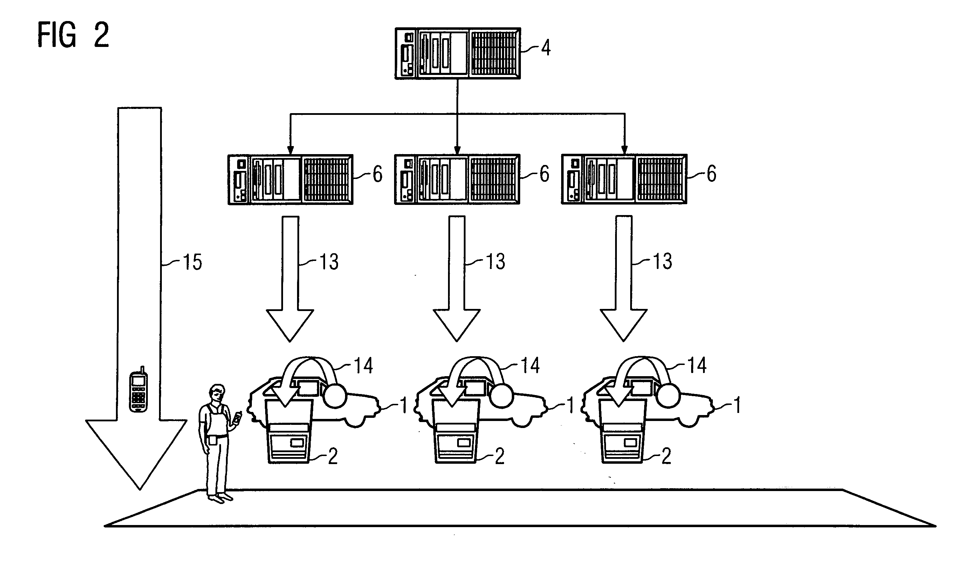

Fig. 2 verdeutlicht, das der hier vorliegenden Erfindung zugrundeliegende Problem im größeren Detail. So sind in Fig. 2 mehrere Kraftfahrzeuge 1 gezeigt, die im Sinne einer Produktionslinie mehrere Bearbeitungsschritte durchlaufen. Sämtliche für die Produktion der Kraftfahrzeuge 1 benötigten Programm- und/oder Datenfiles sind wiederum auf einem zentralen Server 4 abgelegt. Gemäß Fig. 2 ist der zentrale Server 4 mit insgesamt drei Prüfstationen 6 verbunden. Jede der Prüfstationen 6 steuert einen Bearbeitungsschritt innerhalb der Produktionslinie, wobei für einen Schritt auch mehrere identische Prüfstationen parallel eingesetzt werden können und die Schritte nicht in direkter Folge stehen müssen. Abhängig von dem von der jeweiligen Prüfstation 6 zu steuernden Bearbeitungsschritt sind auf der jeweiligen Prüfstation 6 entweder alle oder ein Teil der auf dem Server 4 gespeicherten, verwalteten und gegebenenfalls erneuerten Programm- und/oder Datenfiles abgelegt. In jedem der Bearbeitungsschritte innerhalb der Produktionslinie kommen wiederum mobile Programmier- und/oder Diagnoseeinrichtungen 2 zum Einsatz. Die auf einer Prüfstation 6 abgelegten Programm- und/oder Datenfiles müssen demnach von der Prüfstation 6 wiederum der entsprechenden mobilen Programmier- und/oder Diagnoseeinrichtung 2 zur Verfügung gestellt werden. Dies ist in Fig. 2 durch Pfeile 13 visualisiert. Die mobilen Programmier- und/oder Diagnoseeinrichtungen 2 werden zur Durchführung des Bearbeitungsschritts dann wiederum mit dem Kraftfahrzeug 1 verbunden. Zwischen den mobilen Programmier- und/oder Diagnoseeinrichtungen 2 und den Kraftfahrzeugen 1 werden demnach während eines Bearbeitungsschritts Daten ausgetauscht, was in Fig. 2 durch Pfeile 14 verdeutlicht ist.

Wie bereits erwähnt, ist es für einen ordnungsgemäßen Produktionsprozess der Kraftfahrzeuge entscheidend, dass die mobilen Programmier- und/oder Diagnoseeinrichtungen 2 jeweils mit einem aktuellen Satz von Programm- und/oder Datenfiles bestückt sind. Hierzu ist es erforderlich, dass einerseits festgelegt wird, welche auf dem Server 4 bereitgestellten Programm- und/oder Datenfiles von welcher mobilen Programmier- und/oder Diagnoseeinrichtung 2 benötigt werden. Darüber hinaus muss sichergestellt werden, dass der Server 4 bzw. die Prüfstation 6 die auf den Programmier- und/oder Diagnoseeinrichtungen 2 abgelegten Programm- und/oder Datenfiles ermitteln und deren Status überprüfen kann. Wird festgestellt, dass der auf den mobilen Programmier- und/oder Diagnoseeinrichtungen 2 gespeicherte Satz von Programm- und/oder Datenfiles nicht aktuell ist, so muss weiterhin sichergestellt werden, dass die mobilen Programmier- und/oder Diagnoseeinrichtungen 2 auf den neuesten Stand gebracht werden. Dieses Updaten der mobilen Programmier- und/oder Diagnoseeinrichtungen 2 kann einerseits, wie Fig. 2 durch den Pfeil 15 visualisiert, manuell von einem Arbeiter oder auch automatisch während der Bearbeitung veranlasst werden.

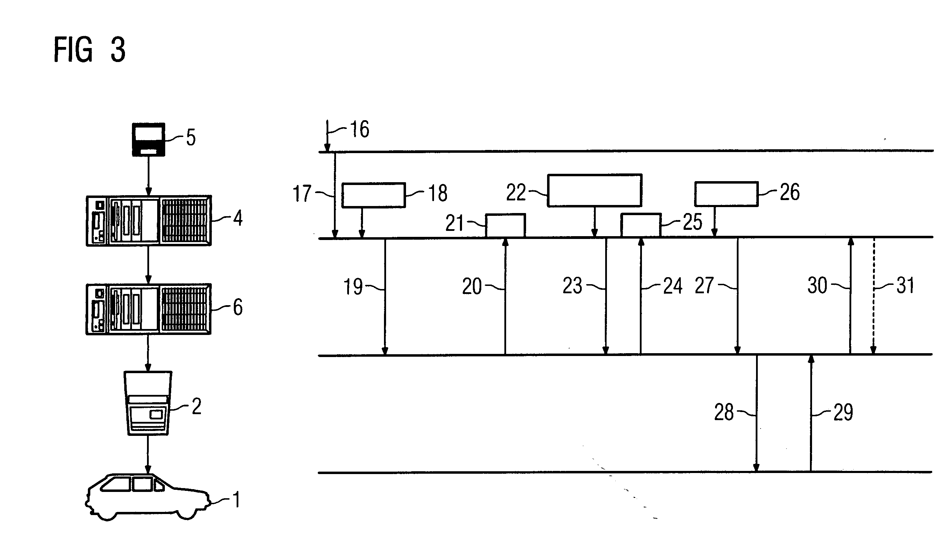

Das Grundprinzip des erfindungsgemäßen Verfahrens zur Handhabung von Programm- und/oder Datenfiles wird nachfolgend anhand von Fig. 3 erläutert.

Wie Fig. 3 anhand des Pfeils 16 zeigt, werden auf einer Diskette 5 gespeicherte und gegebenenfalls erneuerte Programmund/oder Datenfiles auf einem Server 4 abgelegt, gespeichert und verwaltet. Gemäß dem Pfeil 17 stellt der Server 4 alle oder einige der auf dem Server 4 gespeicherten Programmund/oder Datenfiles der Prüfstation 6 zur Verfügung. Auf der Prüfstation 6 werden demnach Kopien aller oder einiger der auf dem Server 4 gespeicherten Programm- und/oder Datenfiles abgelegt. Gelangt nun ein Kraftfahrzeug 1 in den Bereich einer Prüfstation 6, so wird gemäß dem Block 18 eine Kraftfahrzeugs-Identifikationsnummer gescannt, die der Prüfstation 6 angibt, welche Programm- und/oder Datenfiles zur Bearbeitung des Kraftfahrzeugs 1 auf der mobilen Programmier- und/oder Diagnoseeinrichtung 2 gespeichert sein müssen. Diese Informationen werden über Funk von der Prüfstation 6 an die mobile Programmier- und/oder Diagnoseeinrichtung 2 gemäß dem Pfeil 19 übertragen. Stellt die mobile Programmier- und/oder Diagnoseeinrichtung 2 fest, dass die benötigten Programmund/oder Datenfiles auf derselben nicht gespeichert sind, so übermittelt die mobile Programmier- und/oder Diagnoseeinrichtung 2 gemäß dem Pfeil 20 eine Fehlermeldung an die Prüfstation 6. Ein Block 21 verdeutlicht, dass danach das Bearbeitungsverfahren des Kraftfahrzeugs 1 zuerst einmal beendet ist. Alternativ hierzu kann jedoch auch direkt im Programm diese Information ausgewertet und darauf zum Beispiel durch Start eines Downloads reagiert werden.

Auf Basis der von der mobilen Programmier- und/oder Diagnoseeinrichtung 2 übermittelten Fehlermeldung erkennt die Prüfstation 6, dass die mobile Programmier- und/oder Diagnoseeinrichtung 2 zur Durchführung des Bearbeitungsschritts am Kraftfahrzeug 1 aktualisiert werden muss. Gemäß dem in Fig. 3 dargestellten Block 22 wird hierzu von der Prüfstation 6 eine Update-Funktion ausgelöst und gemäß dem Pfeil 23 werden die von der mobilen Programmier- und/oder Diagnoseeinrichtung 2 benötigten Programm- und/oder Datenfiles von der Prüfstation 6 an die mobilen Programmier- und/oder Diagnoseeinrichtungen 2 übertragen. Die übertragenen Programm- und/oder Datenfiles werden dann auf der mobilen Programmier- und/oder Diagnoseeinrichtung 2 abgelegt und gespeichert. Gemäß dem Pfeil 24 übermittelt die mobile Programmier- und/oder Diagnoseeinrichtung 2 eine entsprechende Bestätigung an die Prüfstation 6. Gemäß dem Block 25 ist das Updaten der Programmier- und/oder Diagnoseeinrichtung 2 dann beendet.

Zum gezielten Start eines Updates kann im Sinne des Blocks 26 wieder das Programm gestartet werden, im Beispiel eines Kraftfahrzeugs wird am Kraftfahrzeug 1 die Kraftfahrzeugs-Identifikationsnummer gescannt werden. Anhand von mit der Kraftfahrzeugs-Identifikationsnummer verbundenen Daten ermittelt die Prüfstation 6 wiederum die zur Bearbeitung des Kraftfahrzeugs 1 benötigten Programm- und/oder Datenfiles und übermittelt diese Information im Sinne des Pfeils 27 an die mobile Programmier- und/oder Diagnoseeinrichtung 2. Gemäß dem Pfeil 28 verwendet die mobile Programmier- und/oder Diagnoseeinrichtung 2 die auf derselben gespeicherten Programmund/oder Datenfiles zur Bearbeitung des Kraftfahrzeugs 1, und im Sinne des Pfeils 29 wird die durchgeführte Bearbeitung des Kraftfahrzeugs 1 der mobilen Programmier- und/oder Diagnoseeinrichtung 2 bestätigt. Diese Bestätigung wird im Sinne des Pfeils 30 an die Prüfstation 6 weitergeleitet. Im Sinne des Pfeils 31 können weitere Bearbeitungsschritte am Kraftfahrzeug 1 durchgeführt werden.

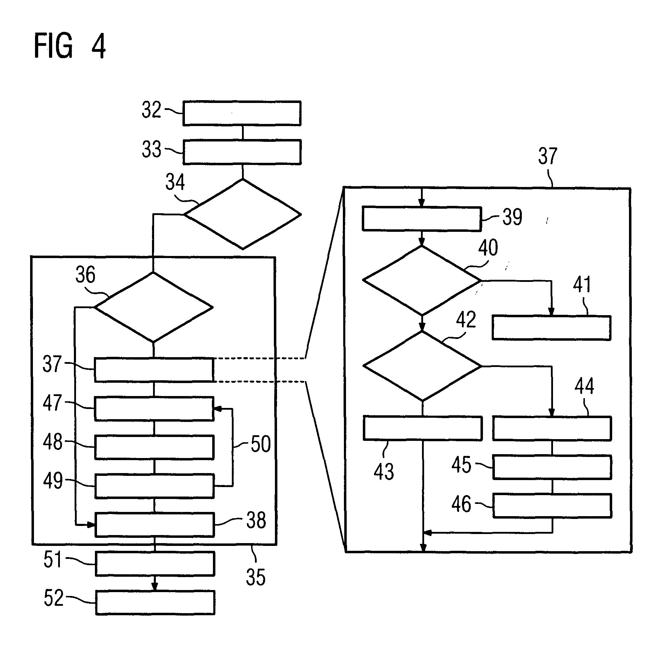

Die Details des erfindungsgemäßen Verfahrens zum Überprüfen sowie Updaten von auf den mobilen Programmier- und/oder Diagnoseeinrichtungen 2 gespeicherten Programm- und/oder Datenfiles werden nachfolgend im Zusammenhang mit Fig. 4 bis 6 erläutert.

Fig. 4 zeigt ein Signalflussdiagramm zum unmittelbaren Überprüfen und/oder Updaten von auf der mobilen Programmier- und/oder Diagnoseeinrichtung 2 gespeicherten Programmund/oder Datenfiles. Dies bedeutet, dass die mobile Programmier- und/oder Diagnoseeinrichtung 2 durch Einlesen einer speziellen Download-Identifikation (s. Block 22 in Fig. 3) upgedatet wird. In diesem Zusammenhang wird in einem ersten Verfahrensschritt, der in Fig. 4 durch den Block 32 dargestellt ist, das Verfahren gestartet und an der Diagnoseeinrichtung 6 eine Identifikationsnummer eingescannt. Das Lesen der Identifikationsnummer an der Prüfstation 6 ist durch den Block 33 dargestellt. Im Block 34 wird verglichen, ob es sich bei den mit der eingelesenen Identifikationsnummer verbundenen Daten um Kriterien zum Download handelt. Ist dies der Fall, so wird die mobile Programmier- und/oder Diagnoseeinrichtung 2 upgedatet. Diese Prozedur muss nicht zwingend zu Beginn des Programms aufgerufen werden, sondern kann an jeder beliebigen Stelle des Programms gestartet werden.

Das Updaten der mobilen Programmier- und/oder Diagnoseeinrichtung 2 ist durch den Block 35 dargestellt, in welchem mehrere weitere Blocks zusammengefasst sind.

Als erster Schritt zum Updaten der mobilen Programmier- und/oder Diagnoseeinrichtung 2 wird im Block 36 überprüft, ob der Soll-Status der mobilen Programmier- und/oder Diagnoseeinrichtung 2 älter ist als der Soll-Status der Prüfstation 6, von der das Updaten der mobilen Programmier- und/oder Diagnoseeinrichtung 2 durchgeführt wird. Ist der Soll-Status der mobilen Programmier- und/oder Diagnoseeinrichtung 2 älter als der Soll-Status der Prüfstation, so bedeutet dies, dass die mobile Programmier- und/oder Diagnoseeinrichtung 2 gegenüber der Prüfstation 6 veraltet ist. In diesem Fall wird auf den Block 37 verzweigt und mit dem Updaten der mobilen Programmier- und/oder Diagnoseeinrichtung 2 gemäß dem Block 37 fortgefahren. Ist hingegen der Soll-Status der mobilen Programmier- und/oder Diagnoseeinrichtung 2 gegenüber dem Soll-Status der Prüfstation 6 jünger, d. h. ist die Prüfstation 6 auf einem veralteten Stand, so wird das Updaten der mobilen Programmier- und/oder Diagnoseeinrichtung 2 durch Verzweigen auf den Block 38 abgebrochen. In diesem Fall ist nämlich die Programmier- und/oder Diagnoseeinrichtung 2 aktueller als die Prüfstation 6. Das kann insbesondere dann der Fall sein, wenn die Prüfstation 6 über eine längere Zeit hinweg nicht in den Produktionsprozess eingebunden war. Im Zusammenhang mit dem Verfahrensschritt gemäß Block 36 soll darauf hingewiesen werden, dass sowohl auf der Prüfstation 6 als auch auf der mobilen Programmier- und/oder Diagnoseeinrichtung 2 eine Sollstruktur der Programm- und/oder Datenfiles abgelegt ist, die auf der jeweiligen Programmier- und/oder Diagnoseeinrichtung 2 gespeichert sein sollen. Im Block 36 wird demnach überprüft, ob die auf der mobilen Programmier- und/oder Diagnoseeinrichtung 2 abgelegte Sollstruktur der Programm- und/oder Datenfiles aktueller ist, als die entsprechende Sollstruktur auf der Prüfstation 6.

Im Verfahrensschritt gemäß Block 36 wird demnach lediglich bestimmt, welche Programm- und/oder Datenfiles auf der mobilen Programmier- und/oder Diagnoseeinrichtung 2 gespeichert sein sollen. Die Überprüfung des tatsächlichen Ist-Status erfolgt erst im Verfahrensschritt gemäß Block 37. Der Verfahrensschritt gemäß Block 37 unterteilt sich wiederum in eine Vielzahl mehrerer Verfahrensschritte, die auf der rechten Seite des Signalflussdiagramms gemäß Fig. 4 dargestellt sind.

Bei der Überprüfung des Ist-Status einer mobilen Programmier- und/oder Diagnoseeinrichtung 2 werden in einem ersten Verfahrensschritt gemäß Block 39 Informationen aus der mobilen Programmier- und/oder Diagnoseeinrichtung 2 ausgelesen, nämlich eine Identifikation einer auf der mobilen Programmierund/oder Diagnoseeinrichtung 2 gespeicherten Firmware sowie eine Identifikation eines Directory der Programmier- und/oder Diagnoseeinrichtung 2, wobei diese Directory-Identifikation die tatsächlich auf der mobilen Programmier- und/oder Diagnoseeinrichtung 2 gespeicherten Programm- und/oder Datenfiles wiedergibt.

Darauffolgend wird im Verfahrensschritt gemäß Block 40 überprüft, ob die auf der mobilen Programmier- und/oder Diagnoseeinrichtung 2 gespeicherte Firmware aktuell ist. Ist die Firmware nicht aktuell, so wird auf den Block 41 verzweigt und das Updateverfahren beendet. Bei einer nicht-aktuellen Firmware-Version auf der mobilen Programmier- und/oder Diagnoseeinrichtung 2 kann dieselbe nicht weiterverwendet werden.

Ist hingegen die Firmware-Version aktuell, so wird auf Block 42 verzweigt. Im Block 42 wird dann überprüft, ob die oben erwähnte Directory-Identifikation auf der mobilen Programmier- und/oder Diagnoseeinrichtung 2 mit der auf der Prüfstation 6 gespeicherten Directory-Identifikation für diese Programmier- und/oder Diagnoseeinrichtung 2 übereinstimmt. In diesem Zusammenhang wird demnach überprüft, ob auf der mobilen Programmier- und/oder Diagnoseeinrichtung 2 Änderungen an den Programm- und/oder Datenfiles durchgeführt worden sind, von welchen die Prüfstation 6 keine Informationen enthält. Falls derartige Änderungen der Programm- und/oder Datenfiles auf der Programmier- und/oder Diagnoseeinrichtung 2 nicht durchgeführt worden sind, stimmen die Directory-Identifikationen auf der Prüfstation 6 und auf der mobilen Programmier- und/oder Diagnoseeinrichtung 2 überein und es wird auf den Block 43 verzweigt. In diesem Fall muss der komplette Inhalt der auf der mobilen Programmier- und/oder Diagnoseeinrichtung 2 gespeicherten Programm- und/oder Datenfiles nicht ausgelesen werden, es kann dann vielmehr mit der auf der Prüfstation 6 gespeicherten, lokalen Kopie des Directory der Programmier- und/oder Diagnoseeinrichtung 2 weitergearbeitet werden.

Wird hingegen im Block 42 festgestellt, dass die Directory-Identifikation auf der mobilen Programmier- und/oder Diagnoseeinrichtung 2 nicht mit der entsprechenden Kopie auf der Prüfstation 6 übereinstimmt, so kann daraus geschlossen werden, dass auf der Programmier- und/oder Diagnoseeinrichtung 2 Änderungen vorgenommen wurden und es wird dann auf Block 4'4 verzweigt. Im Block 44 wird dann das komplette Directory der mobilen Programmier- und/oder Diagnoseeinrichtung 2 ausgelesen. Darauffolgend wird in einem Verfahrensschritt gemäß Block 45 eine Kopie dieses komplett ausgelesenen Directory auf der entsprechenden Prüfstation 6 abgelegt. Weiterhin wird gemäß Block 46 der übergeordnete Server 4 entsprechend upgedatet, damit auf dem übergeordneten Server 4 eine zentrale Verwaltung aller mobilen Programmier- und/oder Diagnoseeinrichtungen 2 erfolgen kann.

Im Block 37 wird demnach auf zeitoptimierte Art und Weise der Ist-Status einer mobilen Programmier- und/oder Diagnoseeinrichtung 2 überprüft. Wird bei dieser Überprüfung festgestellt, dass einige oder mehrere der auf der mobilen Programmier- und/oder Diagnoseeinrichtung 2 gespeicherten Programmund/oder Datenfiles erneuert werden müssen, so wird gemäß dem Block 47 ein Programm- und/oder Datenfile auf die entsprechende mobile Programmier- und/oder Diagnoseeinrichtung 2 heruntergeladen. Nach jedem Herunterladen und damit Updaten der mobilen Programmier- und/oder Diagnoseeinrichtung 2 wird eine entsprechend neue Directory-Identifikation für die mobile Programmier- und/oder Diagnoseeinrichtung 2 im Block 48 erzeugt. Im Block 49 wird hiervon wiederum der übergeordnete Server 4 informiert. Gemäß dem Pfeil 50 wird der Vorgang des Downloadens von Programm- und/oder Datenfiles solange wiederholt, bis alle zu erneuernden Programm- und/oder Datenfiles auf der mobilen Programmier- und/oder Diagnoseeinrichtung 2 upgedatet worden sind.

Es wird dann wieder auf den Block 38 verzweigt, der das Beenden des Update-Vorgangs der mobilen Programmier- und/oder Diagnoseeinrichtung 2 darstellt. Darauffolgend wird dann auf einen Block 51 verzweigt, in dem andere Prüfschritte bzw. Bearbeitungsschritte am herzustellenden Gegenstand, zum Beispiel am Kraftfahrzeug 1, durchgeführt werden. Das Beenden des gesamten Verfahrens ist durch den Block 52 dargestellt.

Das Signalflussdiagramm gemäß Fig. 4 betrifft das komplette Updaten aller auf einer mobilen Programmier- und/oder Diagnoseeinrichtung 2 gespeicherten Programm- und/oder Datenfiles, welches vorzugsweise vor der Bearbeitung eines Produkts durchgeführt wird.

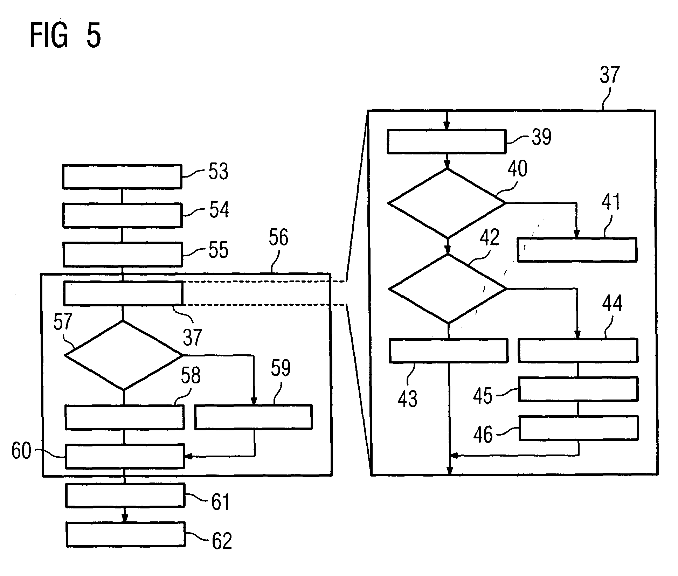

Das Signalflussdiagramm gemäß Fig. 5 betrifft hingegen ein Verfahren, mit dem überprüft wird, ob ein spezielles Programm- und/oder Datenfile auf einer mobile Programmier- und/oder Diagnoseeinrichtung 2 vorhanden ist. Dies erfolgt vorzugsweise automatisch während der Bearbeitung eines Produkts, zum Beispiel des in Fig. 1 bis 3 dargestellten Kraftfahrzeugs. So zeigt Fig. 5 mit einem ersten Block 53 den Start des Verfahrens, bei welchem in einem nachgeschalteten Block 54 an der Prüfstation 6 eine Identifikationsnummer, zum Beispiel des Kraftfahrzeugs 1, eingelesen wird. Anhand der im Block 54 eingelesenen Kraftfahrzeugs-Identifikationsnummer werden Tests bestimmt, die anhand von auf der mobilen Programmier- und/oder Diagnoseeinrichtung 2 gespeicherten Programm- und/oder Datenfiles durchgeführt werden sollen. Das Durchführen eines solchen Bearbeitungsschritts bzw. Prüfschritts am Kraftfahrzeugs ist durch den Block 55 dargestellt. Soll nun gemäß Block 55 mithilfe der mobilen Programmier- und/oder Diagnoseeinrichtung 2 am zu bearbeitenden Kraftfahrzeug 1 ein spezieller Test durchgeführt werden, so muss überprüft werden, ob die hierfür erforderlichen Programm- und/oder Datenfiles auf der mobilen Programmier- und/oder Diagnoseeinrichtung 2 gespeichert sind. Dieser Überprüfschritt ist in Fig. 5 durch einen Block 56 visualisiert, der wiederum mehrere Einzelblocks umfasst.

Als erstes wird hierbei der tatsächliche Inhalt der mobilen Programmier- und/oder Diagnoseeinrichtung 2 überprüft. Dies ist im Block 37 dargestellt.

Bezüglich des Blocks 37 kann auf die Ausführungen verwiesen werden, die im Zusammenhang mit dem Signalflussdiagramm der Fig. 4 getätigt wurden. Der Block 37 gemäß Fig. 5 stimmt nämlich mit dem Block 37 der Fig. 4 überein. Beim Überprüfen des tatsächlichen Inhalts der mobilen Programmier- und/oder Diagnoseeinrichtung 2 wird wiederum die Version der Firmware sowie eine Directory-Identifikation der mobilen Programmier- und/oder Diagnoseeinrichtung 2 ausgelesen. Details ergeben sich aus den Ausführungen zu Fig. 4.

Anhand der im Block 37 ausgelesenen Informationen wird im Block 57 überprüft, ob das konkret gesuchte Programmund/oder Datenfile auf der mobilen Programmier- und/oder Diagnoseeinrichtung 2 gespeichert ist. Ist dies der Fall, so wird auf den Block 58 verzweigt und der spezielle Bearbeitungsschritt kann am herzustellenden Gegenstand durchgeführt werden. Ist hingegen das spezielle File nicht auf der mobilen Programmier- und/oder Diagnoseeinrichtung 2 gespeichert, so wird auf den Block 59 verzweigt und eine entsprechende Anzeige erzeugt, dass der Bearbeitungsschritt nicht ausgeführt werden kann. Nach Beendigung der Überprüfung gemäß Block 60 wird dann auf einen nachgeschalteten Bearbeitungsschritt gemäß Block 61 verzweigt. Im Block 62 wird das gesamte Verfahren beendet.

Im Unterschied zum Signalflussdiagramm gemäß Fig. 4 wird beim Signalflussdiagramm gemäß Fig. 5 demnach nicht der Soll-Status der auf einer mobilen Programmier- und/oder Diagnoseeinrichtung 2 abzulegenden Programm- und/oder Datenfiles abgeprüft. Vielmehr beschränkt man sich hier auf die Überprüfung des tatsächlichen Inhalts der Programmier- und/oder Diagnoseeinrichtung 2.

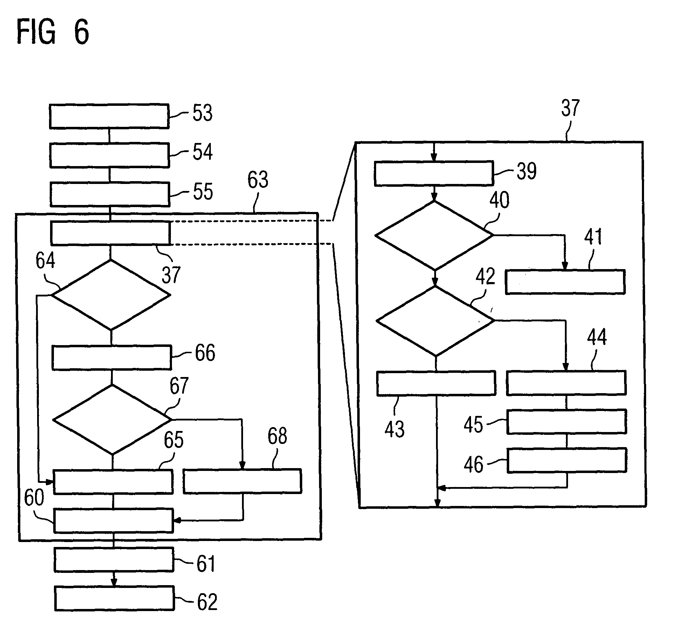

Das Signalflussdiagramm gemäß Fig. 6 entspricht im wesentlichen dem Signalflussdiagramm gemäß Fig. 5. Auch hier wird während der Bearbeitung eines Produkts überprüft, ob ein zur Ausführung eines Bearbeitungsschritts erforderliches Programm- und/oder Datenfile auf der mobilen Programmier- und/oder Diagnoseeinrichtung 2 gespeichert ist. Zur Vermeidung unnötiger Wiederholungen werden daher für wesensgleiche Verfahrensschritte und damit inhaltsgleiche Blocks gleiche Bezugsziffern verwendet.

Im Unterschied zum Signalflussdiagramm gemäß Fig. 5 wird beim Signalflussdiagramm gemäß Fig. 6 nicht nur überprüft, ob ein spezielles Programm- und/oder Datenfile auf einer mobilen Programmier- und/oder Diagnoseeinrichtung 2 vorhanden ist, vielmehr wird hier zusätzlich der Status des Downloadens des entsprechenden Programm- und/oder Datenfiles überprüft. Der Block 56 des Signalflussdiagramms gemäß Fig. 5 ist hierzu durch den Block 63 ausgetauscht.

Im Block 63 wird als erstes gemäß dem Block 37 wiederum der tatsächliche Inhalt des Directory der mobilen Programmier- und/oder Diagnoseeinrichtung 2 anhand einer Directory-Identifikation festgestellt. Darauffolgend wird auf den Block 64 verzweigt, in dem überprüft wird, ob ein konkretes Programmund/oder Datenfile bereits vollständig, d. h. zu 100%, auf die mobile Programmier- und/oder Diagnoseeinrichtung 2 heruntergeladen wurde. Ist dies der Fall, so wird auf den Block 65 verzweigt, der wiedergibt, dass das entsprechende Programmund/oder Datenfile komplett auf der mobilen Programmier- und/oder Diagnoseeinrichtung 2 gespeichert ist.

Wird hingegen in Block 64 festgestellt, dass das Downloaden des entsprechenden Programm- und/oder Datenfiles noch nicht oder nicht vollständig durchgeführt wurde, so wird auf den Block 66 verzweigt. Im Block 66 wird das Herunterladen des entsprechenden Programm- und/oder Datenfiles gestartet bzw. dort fortgesetzt, wo das Downloaden gegebenenfalls zu einem vorherigen Zeitpunkt abgebrochen wurde. In einem nachfolgenden Block 67 wird dann überprüft, ob der Download-Vorgang ordnungsgemäß beendet wurde. Im Falle eines ordnungsgemäßen Beendens wird wiederum auf den Block 65 verzweigt. Wurde hingegen der Download-Vorgang für ein spezielles Programmund/oder Datenfile nicht komplett beendet, so wird auf den Block 68 verzweigt. Beim Verzweigen auf den Block 68 kann eine entsprechende Meldung ausgegeben werden, dass das entsprechende Programm- und/oder Datenfile auf der mobilen Programmier- und/oder Diagnoseeinrichtung 2 nicht komplett gespeichert ist. Jede andere Reaktion auf diese Information ist ebenfalls möglich. So kann zum Beispiel entschieden werden, dass ein entsprechender Bearbeitungsschritt am Produkt in diesem Fall nicht ausgeführt wird. Dieser muss dann zurückgestellt werden, bis für die jeweilige mobile Programmier- und/oder Diagnoseeinrichtung 2 ein komplettes Update durchgeführt worden ist.

Mithilfe des erfindungsgemäßen Verfahrens können auf mobilen Programmier- und/oder Diagnoseeinrichtungen 2 gespeicherte Programm- und/oder Datenfiles zeitsparend und sicher überprüft sowie erneuert werden. Auf einem zentralen Server 4 lässt sich der Status aller mobilen Programmier- und/oder Diagnoseeinrichtungen 2 zentral verwalten und nachverfolgen.

Ausgelöst durch das Scannen einer Identifikation an einer Prüfstation wird entweder vor der Bearbeitung der Produkte für die mobilen Programmier- und/oder Diagnoseeinrichtungen 2 ein komplettes Update durchgeführt oder es wird während der Bearbeitung der Produkte überprüft, ob die entsprechend benötigten Programm- und/oder Datenfiles in der aktuellen Fassung auf der mobilen Programmier- und/oder Diagnoseeinrichtung 2 gespeichert sind. Abhängig von dieser Überprüfung erfolgt ein Update der mobilen Programmier- und/oder Diagnoseeinrichtung.

Abschließend soll noch darauf hingewiesen werden, dass das Updaten der mobilen Programmier- und/oder Diagnoseeinrichtungen 2 vorzugsweise abhängig von den Programm- und/oder Datenfiles zugeordneten Prioritäten erfolgt. So kann nämlich zwischen Programm- und/oder Datenfiles unterschieden werden, die zur Ausführung eines Bearbeitungsschritts am Kraftfahrzeug absolut erforderlich sind oder nicht. Nur dann, wenn ein solches absolut notwendiges Programm- und/oder Datenfile auf der mobilen Programmier- und/oder Diagnoseeinrichtung 2 fehlt, wird ein Update unmittelbar durchgeführt. Ansonsten kann mit dem Update auch gewartet werden.

## Patentansprüche

1. Verfahren zur Handhabung von Programm- und/oder Datenfiles, nämlich zum Überprüfen und/oder Updaten von auf mobilen Programmier- und/oder Diagnoseeinrichtungen (2) gespeicherten Programm- und/oder Datenfiles, wobei auf einem zentralen Server (4) Programm- und/oder Datenfiles gespeichert, verwaltet und erneuert werden, wobei Kopien mindestens einiger der auf dem Server (4) gespeicherten Programm- und/oder Datenfiles auf den mobilen Programmier- und/oder Diagnoseeinrichtungen (2) abgelegt werden, und wobei die auf den mobilen Programmier- und/oder Diagnoseeinrichtungen (2) abgelegten Programmund/oder Datenfiles zur Bearbeitung von Produkten (1) verwendet werden, **dadurch gekennzeichnet, dass** vor und/oder während der Bearbeitung eines Produkts (1) automatisch überprüft wird, ob die auf den mobilen Programmier- und/oder Diagnoseeinrichtungen (2) abgelegten Programmund/oder Datenfiles dahingehend mit den auf dem Server (4) gespeicherten Programm- und/oder Datenfiles übereinstimmen, dass auf dem Server (4) erneuerte Programm- und/oder Datenfiles auch auf der jeweiligen mobilen Programmier- und/oder Diagnoseeinrichtung erneuert sind, und dass unabhängig von dieser Überprüfung gegebenenfalls das Updaten der mobilen Programmier- und/oder Diagnoseeinrichtungen (2) durchgeführt wird.

2. Verfahren nach Anspruch 1, **dadurch gekennzeichnet, dass** auf dem Server (4) für jede der mobilen Programmier- und/oder Diagnoseeinrichtungen (2) eine Directory-Identifikation gespeichert wird, welche die auf der jeweiligen mobilen Programmier- und/oder Diagnoseeinrichtung (2) abzulegenden Programm- und/oder Datenfiles und den Status derselben wiedergibt, wobei dann, wenn auf dem Server (4) ein Programmund/oder Datenfile erneuert wird, auch die entsprechende Directory-Identifikation der jeweiligen mobilen Programmier- und/oder Diagnoseeinrichtungen (2) erneuert wird, auf welchen das entsprechende Programm- und/oder Datenfile gespeichert ist.

3. Verfahren nach Anspruch 1 oder 2, **dadurch gekennzeichnet, dass** auf jeder der mobilen Programmier- und/oder Diagnoseeinrichtung (2) eine Directory-Identifikation gespeichert wird, welche die auf der jeweiligen mobilen Programmier- und/oder Diagnoseeinrichtung (2) tatsächlich abgelegten Programm- und/oder Datenfiles und den Status derselben wiedergibt.

4. Verfahren nach einem oder mehreren der Ansprüche 1 bis 3, **dadurch gekennzeichnet, dass** vor und/oder während der Bearbeitung eines Produkts (1) die auf den mobilen Programmier- und/oder Diagnoseeinrichtung (2) gespeicherte Directory-Identifikation ausgelesen und mit der entsprechenden auf dem Server gespeicherten Directory-Identifikation verglichen wird, und dass dann, wenn die Directory- Identifikationen voneinander abweichen, ein Update der mobilen Programmier- und/oder Diagnoseeinrichtungen (2) durchgeführt wird.

5. Verfahren nach einem oder mehreren der Ansprüche 1 bis 4, **dadurch gekennzeichnet, dass** das Updaten der mobilen Programmier- und/oder Diagnoseeinrichtungen (2) abhängig von den Programm- und/oder Datenfiles zugeordneten Prioritäten erfolgt.
